# FASCICULE DE BREVET EUROPEEN

(11) **EP 3 248 147 B1**
(45) Date de publication et mention de la délivrance du brevet: **20.02.2019**
(21) Numéro de dépôt: 15822974.0
(22) Date de dépôt: 15.12.2015
(51) Int. Cl.: G06K 19/077

(54) **AUTHENTIFICATION D'UNE BOUTEILLE ET DE SON CONTENU**
AUTHENTIFIZIERUNG EINER FLASCHE UND DEREN INHALTS
AUTHENTICATION OF A BOTTLE AND OF ITS CONTENT

(30) Priorité: 21.01.2015 FR 1550476
(43) Date de publication de la demande: 29.11.2017
(73) Titulaire: Origine, 33360 Carignan-de-Bordeaux (FR)
(72) Inventeur: CORONADO, Mickael, 59113 Seclin (FR)
(74) Mandataire: Cabinet Rifflart Vandenbossche
(86) Numéro de dépôt international: PCT/FR2015/053526
(87) Numéro de publication internationale: WO 2016/116672

(56) Documents cités:
- EP-A1- 1 857 374
- US-A1- 2002 185 544
- US-A1- 2007 296 599

## Description

### Domaine technique et Art antérieur

La présente invention se situe dans le domaine des dispositifs de lutte anti-contrefaçon.

La contrefaçon n'évite aucun domaine, pas même celui du vin.

Selon certains chiffres, on estime en effet qu'environ 20% des vins vendus dans le monde sont des contrefaçons.

L'objet de la présente invention traite donc de cette problématique, et concerne plus particulièrement un dispositif d'authentification pour lutter contre les contrefaçons de bouteilles d'alcool, et notamment :
- les bouteilles de vin de type grands crus (premiers crus, etc.),
- les bouteilles de Champagne,
- les bouteilles de spiritueux (Cognac, Armagnac, Whisky, etc.), ou
- tout autre type de bouteilles contenant un liquide à forte valeur marchande.

Un des objectifs de la présente invention est notamment de réduire la contrefaçon des bouteilles d'alcool en fournissant en temps réel une information fiable relative à la bouteille et son contenu.

Plus précisément, un des objectifs de la présente invention est de confirmer ou d'infirmer l'authenticité d'une bouteille en fournissant une information d'identification relative au contenu de la bouteille (par exemple : le nom du château, le millésime, etc.) et en indiquant si ladite bouteille a déjà été ouverte ou non.

La présente invention trouve de nombreuses applications avantageuses pour les vins et notamment les grands crus (premiers crus, etc.).

D'autres applications avantageuses peuvent également être envisagées comme par exemple l'authentification de certaines bouteilles de Champagne ou de spiritueux.

Aujourd'hui, le marché du vin et plus particulièrement celui des grands crus du type premiers crus représente des enjeux financiers très importants : le prix d'une bouteille d'un premier cru peut valoir plusieurs centaines voire plusieurs milliers d'euros en fonction de son millésime.

De la même façon, les ventes aux enchères organisées pour le vin battent de nouveaux records chaque année ; certaines bouteilles d'exception sont achetées plusieurs centaines de milliers d'euros.

Des bouteilles détenues par des collectionneurs sont inestimables du fait de leur rareté mais également de leur histoire et des anecdotes qui leur sont associées.

Cet engouement pour les grands crus incite les acteurs de ce marché, et notamment les viticulteurs et les producteurs, à prendre toutes les précautions nécessaires pour limiter les risques de contrefaçon et garantir l'authenticité des vins, ceci tout en préservant les traditions et le classicisme qui font la renommée de certains grands châteaux (étiquettes, bouchons en liège, esthétique générale de la bouteille, etc.).

Comme énoncé ci-dessus, des faussaires peu scrupuleux et très méthodiques inondent le marché du vin et des grands crus en y introduisant des bouteilles contrefaisantes : 20% des ventes dans le monde.

La contrefaçon des vins prend ainsi de très nombreuses formes toujours plus astucieuses et plus difficiles à déceler.

On retrouve sur le marché (et notamment le marché chinois) des bouteilles avec de fausses étiquettes. La seule distinction qu'on peut faire avec les vraies étiquettes porte parfois sur des petits détails comme une faute d'orthographe.

On retrouve également de vraies bouteilles avec un contenu qui ne correspond pas : il existe d'ailleurs un véritable marché pour les bouteilles de premiers crus vides à la sortie des grands restaurants. Des faussaires sont en effet prêts à racheter certaines bouteilles vides plusieurs centaines d'euros pour pouvoir ensuite remplir ces bouteilles avec un breuvage quelconque et les revendre.

On connaît aussi des cas de contrefaçon dans lesquels le contenu de la bouteille est aspiré à l'aide d'une aiguille très fine perforant la capsule et le bouchon.

On parle de re-remplissage.

Ces pratiques sont d'autant plus fréquentes que l'appréciation de ce type de vins par les consommateurs nécessite une véritable éducation et de véritables connaissances en oenologie.

Dans de nombreux pays, le consommateur n'a pas cette éducation et ces connaissances.

Bien souvent, le seul critère retenu par le consommateur (profane) est le prix de la bouteille : pour lui, un prix élevé est nécessairement gage de qualité.

Il est donc facile de vendre un vin quelconque à ce consommateur pour autant que l'étiquette semble authentique (et de préférence prestigieuse).

Ainsi, le consommateur se retrouve complément démuni face à ces pratiques frauduleuses.

Le Demandeur observe par ailleurs que les préjudices financiers subis par certains viticulteurs et certains producteurs, victimes de la contrefaçon, peuvent être conséquents ; les litiges devant les tribunaux pour obtenir une réparation sont par ailleurs très longs et très complexes.

On notera ici qu'en matière de vin, il peut être particulièrement difficile de démontrer la contrefaçon et de remonter jusqu'aux origines du faussaire.

Outre les préjudices financiers, il faut également souligner que l'image de marque et la renommée de certains châteaux peuvent être atteintes par la contrefaçon : le consommateur n'a plus confiance et ne veut plus acheter de bouteilles provenant de ce château s'il n'est pas assuré de l'authenticité de la bouteille.

Il existe toutefois des solutions mises à la disposition des viticulteurs et des producteurs pour limiter ces risques de contrefaçon et sécuriser le consommateur.

On connaît notamment le document EP 1 857 374.

Ce document divulgue une capsule pour bouteille au-dessus de laquelle est positionnée une étiquette sans contact stockant un identifiant.

Plus particulièrement, dans ce document, l'étiquette qui est à cheval entre la capsule et la bouteille sert de scellé.

La solution proposée dans ce document EP 1 857 374 prévoit la lecture de l'identifiant stocké dans l'étiquette par des moyens de communication sans fil utilisant une technologie de type RFID.

Selon cette solution, le consommateur est contraint ensuite de consulter un serveur distant ou un site Internet pour vérifier à l'aide de cet identifiant l'authenticité de la bouteille, ou plus précisément l'authenticité du scellé.

En effet, l'authenticité du scellé ne garantit pas l'authenticité de la bouteille et de son contenu.

Le Demandeur soumet notamment que ce document EP 1 857 374 ne propose pas de solution pour éviter le perçage des bouchons et l'aspiration à l'aide d'une aiguille du contenu des bouteilles.

De plus, comme le scellé est positionné par-dessus la bouteille et la capsule, un tel dispositif est vulnérable car il est possible de l'enlever pour le positionner sur une bouteille contrefaite.

Le Demandeur observe également qu'un tel scellé placé au-dessus de la capsule est inesthétique ; ceci n'est pas acceptable pour la plupart des châteaux produisant un grand cru de type premier cru.

Il existe également d'autres solutions telles que celle développée conjointement par les sociétés SELINKO et INSIDE SECURE.

Cette solution connue sous la marque « *CAPSFAL*® » consiste à doter le goulot de la bouteille d'une étiquette électronique formée par une puce électronique connectée à une antenne.

Selon cette technologie, l'étiquette est désactivée mécaniquement dès le retrait de la capsule.

Cette solution permet aux consommateurs de scanner l'étiquette avec un terminal de communication de type « *SmartPhone* » doté de moyens de communication sans fil de type NFC (pour *« Near Field Communication* ») pour aller consulter sur le site Internet dédié l'authenticité des bouteilles.

Cette solution nécessite l'installation préalable sur le terminal de communication d'une application logicielle.

C'est à travers cette application logicielle et une connexion au réseau Internet que l'utilisateur peut aller vérifier l'authenticité de la bouteille.

En tout état de cause, la technologie « *CAPSFAL*® » ne propose pas de solution pour détecter le perçage des bouchons de bouteilles et l'aspiration à l'aide d'une aiguille du contenu de ces bouteilles.

Le Demandeur soumet par ailleurs que les étiquettes sans contact et les scellés proposés dans l'état de la technique ont une durée de vie trop courte pour répondre aux exigences de longue garde des grands vins.

### Objet et résumé de la présente invention

La présente invention vise à améliorer la situation décrite ci-dessus.

Un des objectifs de la présente invention est de remédier aux différents inconvénients mentionnés ci-dessus en proposant une solution simple d'utilisation, efficace, robuste, durable dans le temps (plus de 30 ans, voire plus encore) et esthétique (le moins visible possible) permettant de garantir l'authenticité du contenu d'une bouteille le tout de façon autonome, c'est-à-dire sans interroger un serveur distant et/ou sans consulter une application logicielle installée sur un terminal de communication.

A cet effet, l'objet de la présente invention concerne selon un premier aspect un dispositif électronique d'authentification d'une bouteille dont le goulot est fermé par un bouchon recouvert par une capsule longiligne.

Selon l'invention, le dispositif est destiné à être positionné entre la bouteille et la capsule.

Avantageusement, le dispositif selon la présente invention comporte un circuit électronique comprenant un support isolant souple sur lequel s'étend sensiblement longitudinalement et sans chevauchement au moins un fil conducteur formant les pistes du circuit.

Par « *sans chevauchement* » au sens de la présente invention, il faut comprendre ici dans toute la description qui suit que les pistes ne sont pas en contact les unes avec les autres.

En d'autres termes, les pistes du circuit qui s'étendent sur le support isolant sont isolées électriquement les unes des autres.

Avantageusement, le circuit électronique comprend une puce électronique qui stocke au moins une donnée d'identification.

De préférence, cette donnée d'identification contient au moins une information relative au contenu de la bouteille : il peut s'agir par exemple d'information du type le nom du château, le millésime, l'année de mise en bouteille, le numéro de la bouteille, la contenance de la bouteille, le volume d'alcool, etc.

L'homme du métier comprendra ici que la puce électronique peut stocker d'autres types d'information (confidentielle ou non).

Avantageusement, le circuit électronique comprend en outre une antenne.

Cette antenne est de préférence configurée pour coopérer avec la puce électronique afin de transmettre par voie sans fil ladite au moins une donnée d'identification à destination d'un lecteur externe, ceci par exemple lorsque l'antenne est dans la plage de couverture du lecteur.

De préférence, ce lecteur est configuré pour afficher sur un écran les informations d'identification, et par exemple l'étiquette du château.

Optionnellement, cette antenne peut coopérer avec la puce en utilisant un circuit d'adaptation composé d'un ou plusieurs composants électroniques.

Optionnellement, l'antenne comprend une succession de pistes disposées de façon à maximiser les performances de l'antenne en fonction des contraintes de places et du positionnement de l'antenne sur le circuit électronique.

Dans un mode de réalisation, ces pistes forment des rectangles concentriques.

Alternativement, les pistes de l'antenne peuvent former une pluralité d'anneaux concentriques (forme d'escargot).

Lorsque les pistes de l'antenne sont positionnées autour du goulot de la bouteille, celles-ci peuvent par exemple former une pluralité d'anneaux les uns par-dessus les autres formant un bobinage.

Alternativement, lorsque les pistes de l'antenne sont positionnées autour du goulot de la bouteille, celles-ci peuvent également former une pluralité d'anneaux les uns à côté des autres formant une épaisseur uniforme de fils (comme un ressort avec chacun des fils qui se touchent).

Avantageusement, le circuit électronique comprend également des moyens de détection de perçage de bouchon.

Ces moyens, caractéristiques de la présente invention, recouvrent au moins partiellement le goulot lorsque le dispositif est positionné entre la bouteille et la capsule.

De préférence, les moyens de détection de perçage de bouchon recouvrent totalement le goulot lorsque le dispositif est positionné entre la bouteille et la capsule.

Optionnellement, les moyens de détection de perçage de bouchon prennent la forme générale d'un disque compatible avec la taille du goulot de la bouteille.

Avantageusement, les moyens de détection de perçage de bouchon sont reliés électriquement à la puce électronique par les pistes dudit circuit.

Avantageusement, la puce électronique est configurée de manière à déterminer que le bouchon est percé ou retiré lorsque la liaison électrique avec les moyens de détection de perçage de bouchon est rompue.

Ainsi, grâce à cet agencement de moyens techniques, caractéristique de la présente invention, on dispose d'un dispositif fiable et autonome qui garantit au consommateur final mais également au vendeur, revendeur, distributeur, voire même au collectionneur ou au commissaire-priseur, de vérifier l'authenticité de la bouteille et plus particulièrement l'authenticité de son contenu.

En effet, l'action de percer le bouchon et/ou de retirer la capsule (en étain), même délicatement, coupe au moins une piste. Comme le fil conducteur s'étend sensiblement longitudinalement le long de la capsule, le fait de retirer la capsule coupe nécessairement ce fil de conducteur. De la même façon, le perçage du bouchon coupe également la liaison électrique grâce aux moyens de détection de perçage du bouchon qui couvre le goulot.

Ainsi, en cas de perçage ou d'arrachage, soit la puce détecte la coupure de la piste et reçoit l'information du changement d'état ; soit la piste est coupée au niveau de l'antenne et la puce ne peut plus transmettre les données (elle n'est plus accessible).

Dans un cas comme dans l'autre, le lecteur peut déduire l'information selon laquelle la bouteille a été ouverte ou percée.

Ainsi, quand la bouteille n'est pas authentique (c'est-à-dire quand une personne a déjà ouvert la capsule ou percé le bouchon), le consommateur ne reçoit pas d'information ou reçoit l'information lui indiquant la contrefaçon.

Par contre, quand la bouteille est authentique (c'est-à-dire quand la capsule et le bouchon sont intacts), le lecteur dédié positionné à proximité de l'antenne reçoit l'information d'identification avec par exemple le nom du château, le millésime, et éventuellement le numéro de la cuvée et/ou le numéro de la bouteille si celle-ci est numérotée.

Dans un mode de réalisation avantageux, les moyens de détection de perçage de bouchon comprennent un maillage d'au moins un fil conducteur formant les pistes du maillage.

De préférence, les pistes du maillage ne se chevauchent pas ; elles sont électriquement isolées les unes des autres.

Dans un mode de réalisation avantageux, c'est le même fil conducteur qui forme les pistes du maillage et les pistes du circuit. Ce même fil forme ainsi un circuit fermé.

Dans ce mode, la rupture de ce fil permet la détection indifférenciée de l'arrachage de la capsule ou du perçage du bouchon.

Alternativement, les pistes du maillage et les pistes du circuit peuvent être formées par des fils différents. Ils sont dans ce cas montés en parallèle et sont indépendants les uns des autres.

Avantageusement, les pistes du maillage sont espacées entre elles d'une distance de séparation sensiblement comprise entre de l'ordre de 50 µm à 300 µm.

De préférence, la distance de séparation entre chacune des pistes du maillage est sensiblement comprise entre de l'ordre de 50 µm à 150 µm.

De préférence, la distance de séparation entre chacune des pistes du maillage est sensiblement comprise entre de l'ordre de 80 µm à 150 µm.

Avantageusement, chacune des pistes du maillage présente une largeur sensiblement comprise entre de l'ordre de 50 µm à 300 µm.

De préférence, la largeur de chacune des pistes du maillage est sensiblement comprise entre de l'ordre de 50 µm à 150 µm.

De préférence, la largeur de chacune des pistes du maillage est sensiblement comprise entre de l'ordre de 80 µm à 150 µm.

De préférence, la largeur et la distance de séparation sont sensiblement de même dimension.

Avantageusement, chacune des pistes du maillage présente une épaisseur comprise entre de l'ordre de 10 µm à 50 µm.

Dans un mode de réalisation avantageux alternatif, les moyens de détection de perçage de bouchon comprennent une pastille.

Cette pastille est configurée de manière à ce que, lorsqu'un objet extérieur tel qu'une aiguille perce ladite pastille, la liaison électrique entre la pastille et la puce est rompue.

De préférence, la pastille est composée au moins partiellement en céramique.

La pastille est donc reliée électriquement à la puce par les pistes du circuit.

Ainsi, dans ce mode, lorsqu'un objet tel qu'une aiguille perce la pastille, celle-ci se brise et le contact électrique ne se fait plus.

Dans ce cas, la puce peut déduire l'information de perçage.

Avantageusement, le dispositif selon la présente invention comprend une sonde d'impédance configurée :
- pour mesurer une variation d'impédance aux bornes des moyens de détection de perçage de bouchon, et
- pour déterminer en fonction de la variation mesurée si le bouchon a été percé.

La variation d'impédance révèle ici une intrusion ou au moins une tentative d'intrusion.

Dans un mode de réalisation avantageux, le support isolant se présente sous la forme d'une étoile à six branches.

Dans ce mode, l'antenne est positionnée sur la portion distale d'une des six branches de l'étoile et les moyens de détection de perçage de bouchon sont positionnés dans la portion centrale de l'étoile pour recouvrir au moins partiellement le goulot lorsque le dispositif est positionné entre la bouteille et la capsule.

Cette configuration en étoile à six branches favorise notamment le positionnement du dispositif contre la paroi externe du goulot de la bouteille.

Le Demandeur soumet que cette configuration en étoile ajoute une épaisseur uniforme tout autour du goulot ; si chacune des branches de l'étoile se touche parfaitement les unes aux autres, ceci peut rendre le dispositif moins visible qu'un dispositif selon une configuration utilisant par exemple deux branches ; la présence d'uniquement deux branches peut créer un léger marquage sur la capsule après sertissage. Néanmoins, une configuration à deux branches peut également être envisagée, notamment pour des raisons de coût.

De préférence, le support est suffisamment fin pour épouser au mieux le goulot de la bouteille, notamment la bague pour les bouteilles de vin.

La puce est quant à elle positionnée sur l'une des branches, par exemple la branche principale, de sorte que, lorsque le dispositif est positionné entre la bouteille et la capsule, la puce n'entre pas en contact avec la bague de la bouteille.

Le dispositif selon la présente invention doit préférentiellement présenter une épaisseur d'environ 100 µm (soit l'équivalent de l'épaisseur de la capsule en étain).

Le Demandeur observe après de nombreux tests que, si le dispositif est collé directement sur la capsule avant sertissage, la capsule se déforme lors du sertissage.

Il est donc préférable de coller d'abord le dispositif autour du goulot de la bouteille et ensuite de sertir la capsule autour du goulot (comme s'il n'y avait pas de dispositif).

Le Demandeur n'exclut toutefois pas la possibilité de coller le dispositif selon la présente invention contre la paroi interne de la capsule, puis de réaliser le sertissage de la capsule (intégrant le dispositif) autour du goulot de la bouteille. On peut également prévoir que le dispositif est formé directement dans la capsule, par exemple par gravure des pistes directement dans la capsule.

Dans un mode de réalisation, le support isolant comprend un gaufrage à la périphérie des moyens de détection de perçage de bouchon.

Dans un autre mode de réalisation qui peut éventuellement être combiné avec le précédent mode, le support isolant comprend une portion élastique à la périphérie des moyens de détection de perçage de bouchon.

Dans un cas comme dans l'autre, ce gaufrage et/ou cette portion élastique ont pour fonction de permettre au support d'épouser au mieux la forme du goulot de la bouteille lorsque le dispositif est positionné entre la bouteille et la capsule, et ce notamment au niveau de la bague de la bouteille et la courbure du sommet du goulot de la bouteille à la périphérie des moyens de perçage de bouchon.

De préférence, le support isolant est constitué au moins partiellement dans un matériau ayant des propriétés mécaniques pour résister aux contraintes mécaniques exercées lors du sertissage de la capsule avec la bouteille. Il doit notamment garder sa forme après le sertissage. Il ne doit pas non plus s'étirer en longueur (contrairement à la capsule).

Le support utilisé est souple.

Il peut être constitué au moins partiellement dans un polymère thermoplastique choisi par un polyimide, un polyester (et notamment les polyesters thermoplastiques) ou un PVC.

Le polyimide peut être du type par exemple KAPTON.

Le support peut une être simple couche ou multicouche.

Il peut également comprendre une fine couche de cuivre.

Les polyesters thermoplastiques peuvent être par exemple de type PET (Polyéthylène Téréphtalate), de type PBT (Polybutylène Téréphtalate) ou encore de type PEN (Polyéthylène Naphtaline).

De préférence, les pistes sont constituées au moins partiellement dans un matériau conducteur, inoxydable, malléable et ductiletel que par exemple le cuivre, l'étain ou encore l'aluminium.

Le Demandeur soumet que le cuivre est préféré notamment pour sa bonne conductivité, sa résistance à l'oxydation et ses propriétés mécaniques.

L'aluminium peut être considéré dans certains cas d'application car il présente une dureté moindre que celle du cuivre et proche de celle de l'étain utilisé pour les capsules.

Ainsi, la composition du support et son épaisseur ainsi que les pistes du circuit, leur composition et leur épaisseur sont sélectionnées pour ne pas s'étirer en longueur et ne pas déformer les dessins et les propriétés des pistes du circuit lors du sertissage.

Avantageusement, le dispositif selon la présente invention comprend des moyens de mesure, tels que par exemple une sonde de température et/ou d'humidité,reliés électriquement à la puce.

De préférence, ces moyens de mesure sont configurés pour mesurer la température et/ou le taux d'humidité ambiants.

Ces moyens sont en outre configurés pour fournir à la puce les informations relatives à la température et/ou au taux d'humidité ambiants ; de préférence, la puce est apte à stocker et historiser les informations reçues.

Le consommateur final ou le restaurateur peut ainsi connaître la température et/ou le taux d'humidité de la bouteille au moment de la dégustation.

Le consommateur final ou le restaurateur (mais également le vendeur, le revendeur, le collectionneur, etc.) peut également connaître les conditions de conservation de la bouteille pour s'assurer que ces conditions sont bonnes pour la dégustation du vin.

Avantageusement le dispositif selon la présente invention comprend des moyens d'avertissement tels que exemple un thermostat et/ou un hygrostat.

Dans une alternative, les moyens d'avertissementsont configurés pour générer un premier signal d'alerte si la température et/ou le taux d'humidité ambiants ne sont pas situés dans une plage de valeurs prédéterminées.

De préférence, le premier signal d'alerte est généré si la température et/ou le taux d'humidité mesurés ne sont pas dans une plage de valeurs prédéterminées pendant une période d'exposition déterminée : il est donc possible par exemple de programmer des seuils haut et bas ainsi qu'une durée d'exposition.

Optionnellement, ce thermostat et cet hygrostat peuvent mesurer directement cette température et/ou ce taux d'humidité. Dans ce cas, ces éléments se suffisent à eux-mêmes.

La puce est apte alors à recevoir et stocker le signal d'alerte généré pour le transmettre au lecteur lors de la lecture.

Dans un mode particulier, ces moyens d'avertissement sont intégrés dans la puce.

Le consommateur final ou le restaurateur (mais également le vendeur, le revendeur, le collectionneur, etc.) peut également connaître les conditions de conservation de la bouteille pour s'assurer que ces conditions étaient bonnes (ou non) pour la maturation du vin.

On peut également prévoir une agrégation des informations contenues dans ce signal d'alerte avec les informations contenues dans les données d'identification.

Il est ainsi possible de connaître lors de la lecture de la puce si une bouteille a été exposée à des conditions de température et/ou d'humidité non recommandées par le producteur pour un bon vieillissement et une bonne maturation.

Avantageusement, le dispositif selon la présente invention comprend un capteur de vibrations qui est configuré pour mesurer les vibrations se propageant à travers la bouteille et pour générer un deuxième signal d'alerte.

Le capteur peut détecter les vibrations périodiques (comme celles engendrées par une perceuse) et ne pas réagir aux vibrations aléatoires (comme celles engendrées par le transport ou les chocs...).

Le capteur peut également être configuré pour détecter les vibrations sur une plage de l'ordre de 30Hz à 300Hz pendant environ au moins une seconde ; ceci permet de déterminer une information de tentative d'intrusion à la puce.

Alternativement, les fonctions de détection de vibrations peuvent être intégrées directement dans la puce.

Dans une variante comme dans l'autre, le dispositif est capable de détecter la plage des fréquences qui correspondent aux vibrations émises sur la bouteille par exemple en cas de tentative de perçage du bouchon ou du verre.

On notera ici que les vibrations liées aux chocs subis par la bouteille (par exemple celles provoquées lors d'un transport) ne font pas partie de cette plage de fréquences.

De la même façon, on peut également prévoir une agrégation des informations contenues dans ce signal d'alerte avec les informations contenues dans les données d'identification.

Avantageusement, le dispositif selon la présente invention comprend un récepteur de géolocalisation de type GPS qui est configuré pour transmettre à la puce électronique les coordonnées géographiques du dispositif.

Le dispositif peut également garder en mémoire dans la puce l'historique des lectures (c'est-à-dire des scans).

Il est ainsi possible d'interroger la puce et d'identifier les lecteurs qui ont scanné la bouteille depuis le château.

Il est prévu que les lecteurs soient anonymes ; néanmoins, chaque utilisateur du lecteur doit déclarer sa ville et son pays de résidence.

Les informations relatives à chaque scan sont alors stockées dans la bouteille (la puce).

Dans un mode de réalisation particulier, la puce électronique comprend au moins un module de stockage sécurisé ; chaque module est de préférence accessible uniquement à l'aide d'une clé d'identification.

Ainsi, chaque puce peut posséder un identifiant sous forme de clé codée.

La puce peut ainsi être partitionnée : elle est capable de stocker les informations dans des espaces de stockage différents de sorte par exemple qu'une partie des données soit accessible aux consommateurs par simple lecture et qu'une autre partie soit accessible seulement aux producteurs ou aux viticulteurs à l'aide d'une clé privée ou à l'aide d'un moyen de lecture spécifique dans le cas où ces données sont accessibles par une fréquence différente.

Avantageusement, l'antenne comporte plusieurs spires formant un anneau. Ces spires sont de préférence formées par le fil conducteur du circuit.

Avantageusement, l'antenne crée un champ magnétique compatible à celui émis par le lecteur.

Avantageusement, l'antenne représente une inductance qui est activée par l'énergie du lecteur. On parle d'antenne par induction.

Avantageusement, l'antenne est une antenne dite par simulation.

Avantageusement, l'antenne est directive.

Dans une autre configuration, l'antenne utilise la capsule pour rayonner en utilisant le même principe physique que pour les antennes des ondes radios d'amplitude de fréquence (petites, moyennes et grandes ondes).

Avantageusement, l'antenne dépasse au moins partiellement de la capsule lorsque le dispositif est positionné entre la capsule et la bouteille.

Ceci améliore le rayonnement de l'antenne.

La taille de l'antenne est optimisée afin de dépasser le moins possible de la capsule.

Optionnellement, le support isolant comprend une couche de ferrite. Cette couche permet de réduire les interférences magnétiques.

L'objet de la présente invention concerne selon un deuxième aspect une bouteille dont le goulot est fermé par un bouchon recouvert par une capsule.

Avantageusement, la bouteille comprend un dispositif électronique d'authentification tel que celui décrit ci-dessus positionné entre la bouteille et la capsule.

De préférence, les pistes du circuit sont en regard de la bouteille et la face isolante est en regard de la capsule.

L'objet de la présente invention concerne selon un troisième aspect un procédé de fabrication d'une bouteille dont le goulot est fermé par un bouchon recouvert par une capsule.

Avantageusement, le procédé selon la présente invention comporte notamment les étapes suivantes :
- une première étape au cours de laquelle on positionne un dispositif électronique d'authentification tel que celui décrit ci-dessus autour du goulot de la bouteille, et
- une deuxième étape au cours de laquelle la capsule et le dispositif sont sertis ensemble autour du goulot pour sceller la fermeture de la bouteille.

De préférence, lors de la première étape, le dispositif est collé sur la bouteille, par exemple autour du goulot de la bouteille et de la bague.

Alternativement, on peut également prévoir que le dispositif selon l'invention soit collé directement sur la paroi interne de la capsule, puis que l'ensemble formé par la capsule et le dispositif soit serti autour du goulot de la bouteille.

L'objet de la présente invention concerne selon un quatrième aspect un ensemble pour l'authentification d'une bouteille dont le goulot est fermé par un bouchon recouvert par une capsule.

Avantageusement, cet ensemble comprend :
- au moins un dispositif électronique d'authentification tel que celui décrit ci-dessus qui est destiné à être positionné entre la bouteille et la capsule, et
- un lecteur externe apte à lire la donnée d'identification stockée dans la puce électronique du dispositif lorsque l'antenne du dispositif est dans la plage de couverture du lecteur.

L'objet de la présente invention concerne selon un cinquième aspect une utilisation d'un dispositif électronique d'authentification tel que celui décrit ci-dessus pour l'authentification d'une bouteille contenant un vin de type grand cru (premier cru, etc.).

D'autres utilisations alternatives peuvent également être envisagées dans le cadre de la présente invention.

L'objet de la présente invention concerne selon un sixième aspect une capsule pour bouteille comprenant un dispositif électronique d'authentification tel que celui décrit ci-dessus.

De préférence, un tel dispositif est collé directement ou indirectement sur la paroi interne de la capsule.

Ainsi, la présente invention, par ses différentes caractéristiques techniques structurelles et fonctionnelles, permet de garantir (au consommateur final, mais également au vendeur, revendeur, distributeur, commissaire-priseur, collectionneur, etc.) l'authenticité du contenu d'une bouteille en identifiant toutes intrusions sur la capsule et/ou le bouchon d'une bouteille.

### Brève description des figures annexées

D'autres caractéristiques et avantages de la présente invention ressortiront de la description ci-dessous, en référence aux figures la-lb à 8 annexées qui en illustrent plusieurs exemples de réalisation dépourvus de tout caractère limitatif et sur lesquelles :
- les figures 1a et 1b représentent chacune une vue en perspective d'une bouteille dont le goulot est fermé par un bouchon recouvert par une capsule, ladite bouteille étant équipée d'un dispositif électronique d'authentification selon l'invention ;
- les figures 2a et 2b représentent chacune une vue d'un dispositif électronique d'authentification selon un premier exemple de réalisation de la présente invention;
- les figures 3a et 3b représentent chacune une vue d'un dispositif électronique d'authentification selon un deuxième exemple de réalisation de la présente invention ;
- les figures 4a et 4b représentent chacune une vue d'un dispositif électronique d'authentification selon un troisième exemple de réalisation de la présente invention;
- les figures 5a et 5b représentent chacune une vue d'un dispositif électronique d'authentification selon un quatrième exemple de réalisation de la présente invention;
- les figures 6a et 6b représentent chacune une vue d'un dispositif électronique d'authentification selon un cinquième exemple de réalisation de la présente invention ;
- la figure 7 représente une vue schématique d'un exemple de réalisation d'un ensemble pour l'authentification d'une bouteille dont le goulot est fermé par un bouchon recouvert par une capsule ;
- la figure 8 représente une vue éclatée d'une bouteille comprenant un dispositif conforme aux figures 2a et 2b entre le goulot de la bouteille et la capsule de fermeture.

### Description détaillée d'un exemple de réalisation avantageux

Un dispositif électronique d'authentification selon plusieurs exemples de réalisation avantageux ainsi que la bouteille équipée d'un tel dispositif vont maintenant être décrits dans ce qui va suivre en faisant référence conjointement aux figures la-lb à 8.

Comme expliqué précédemment, les grands crus et notamment les premiers crus n'échappent pas à la contrefaçon.

Une des problématiques rencontrées par les châteaux pour limiter la contrefaçon et garantir l'authenticité d'une bouteille et de son contenu (aux consommateurs mais également aux vendeurs, revendeurs, restaurateurs, distributeurs, commissaires-priseurs, ou encore aux collectionneurs) est notamment de pouvoir certifier, en temps réel et de préférence avec un système autonome, que le bouchon de la bouteille n'a pas été percé et/ou que la capsule n'a pas été arrachée, et/ou que la bouteille (le contenant) est authentique.

Une des autres problématiques rencontrées est liée aux fausses étiquettes et à la circulation de fausses bouteilles qui en découlent.

Classiquement, une bouteille 200 présente un goulot 201 fermé par un bouchon 202 ; le bouchon 202 est recouvert par une capsule 300 servant de scellé pour sécuriser la fermeture avec le bouchon 202.

On observe des contrefaçons de grands crus qui consistent à récupérer le contenu de la bouteille 200 en perçant le bouchon 202 et la capsule 300 avec une aiguille, qui dans certains cas peut être très fine (par exemple environ 500 µm) et à aspirer le contenu de celle-ci.

Permettre la détection d'un arrachage/perçage de la capsule 300 et/ou du bouchon 202 de la bouteille 200 est un des objectifs de la présente invention.

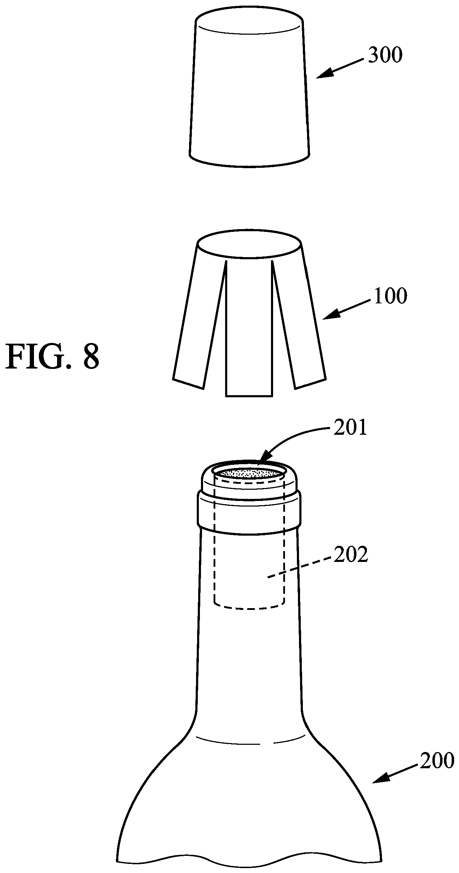

Ceci est rendu possible dans le cadre de la présente invention par un dispositif électronique d'authentification 100 qui est destiné à être positionné entre la bouteille 200 et la capsule 300, comme illustré en figure 8.

Pour satisfaire les exigences des châteaux en matière d'esthétisme, il est souhaitable que le dispositif 100 soit peu visible (voire invisible) et s'intègre le plus discrètement possible sur les bouteilles, comme illustré en figure la ou 1b.

Ainsi, selon la présente invention, le dispositif 100 comporte avantageusement un circuit électronique 10.

Ce circuit 10 comprend un support isolant 11 souple.

De préférence, il est prévu qu'un tel support 11 soit suffisamment fin pour épouser au mieux la paroi interne de la capsule 300 et la paroi externe du goulot 201 de la bouteille 200.

En effet, il est prévu que ce dispositif 100 soit fixé sur le goulot 201 de la bouteille 200 et s'assemble avec la capsule 300 lors du sertissage de la capsule 300 autour du col de la bouteille 200.

Alternativement, il est possible d'intégrer directement le dispositif 100 sur la paroi interne de la capsule 300 puis de sertir l'ensemble autour du goulot 201 de la bouteille 200.

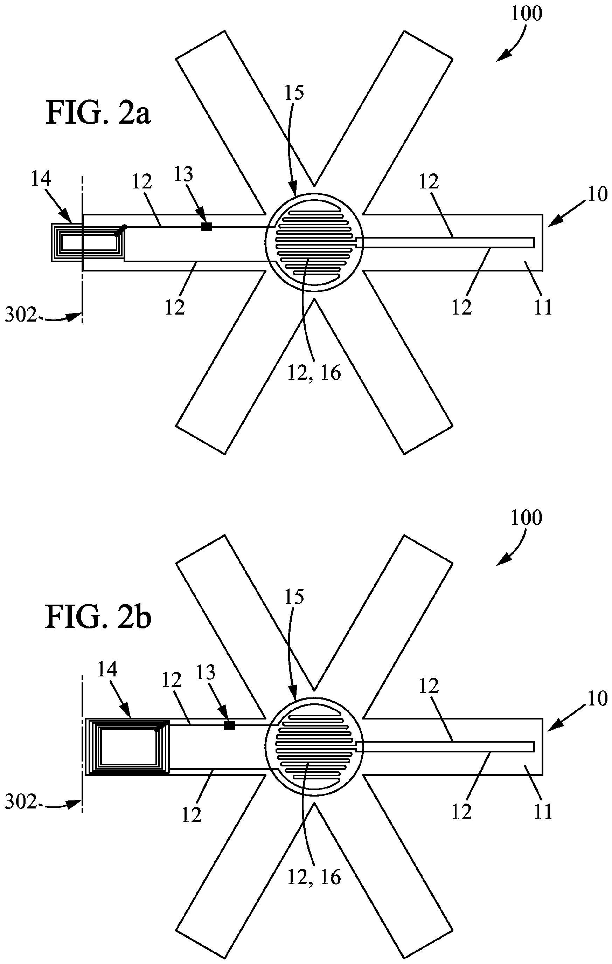

Les exemples des figures2a et 2b vont être décrits plus en détails dans ce qui va suivre, les autres exemples des figures suivantes n'étant que de simples variantes de réalisation.

Dans les deux exemples de réalisation illustrés aux figures 2a et 2b, le support 11 présente une forme d'étoile avec six branches.

Cette forme d'étoile à six branches favorise le positionnement du dispositif 100 contre la paroi externe du goulot 201 de la bouteille 200 et contre la paroi interne de la capsule 300aprèssertissage.

On comprend en effet qu'une fois replié au niveau de la base des branches de l'étoile, le dispositif 100 recouvre quasi-intégralement l'intérieur de la capsule 300 métallique sertie.

Dans les exemples décrits ici, malgré sa finesse et sa souplesse nécessaire à son intégration avec la capsule 300, le support 11 est tout de même composé dans un matériau ayant des propriétés mécaniques suffisantes pour résister aux contraintes exercées lors du sertissage de la capsule 300 avec la bouteille 200.

Dans l'exemple décrit ici, le support 11 est constitué au moins partiellement dans un polyester thermoplastique de type PEN (polyéthylène Naphtaline) ou d'un polyimide de type KAPTON.

D'autres matériaux peuvent cependant être envisagés dans le cadre de la présente invention.

Le support 11 présente sur la face (isolante) destinée à être en regard de la capsule 300 une couche de matériau isolant.

Dans une alternative, la couche isolante est composée de ferrite pour réduire les interférences électromagnétiques.

Sur l'autre face d'une des six branches, appelée branche principale, s'étend longitudinalement (c'est-à-dire dans la longueur de la branche) un fil conducteur 12 dans un sens puis dans l'autre.

Dans les exemples décrits ici, ce même fil conducteur 12 s'étend également sur toute la longueur de la branche opposée à la branche principale pour former une boucle.

Ce même fil conducteur 12 forme ainsi les pistes du circuit 10.

Comme on pourra le comprendre dans la suite, ces pistes du circuit constituent des moyens de détection d'arrachage de la capsule 300.

Dans ces différents exemples décrits ici, il s'agit d'un unique fil conducteur 12 ; l'homme du métier comprendra ici que les pistes du circuit peuvent être formées de plusieurs fils conducteurs, étant entendu que les pistes du circuit ne se chevauchent pas entre elles.

Dans chacun des exemples décrits ici, le circuit électronique 10 comprend également une puce électronique 13 et une antenne 14.

Plus particulièrement, dans les exemples des figures 2a et 2b, la puce 13 et l'antenne 14 sont positionnées sur la branche principale.

On peut observer que, dans l'exemple de la figure 2a, l'antenne 14 sur la portion distale de la branche principale dépasse partiellement de la capsule 300 lorsque le dispositif 100 est positionné entre la bouteille 200 et la capsule 300.

Dans cet exemple, la branche principale est donc légèrement plus longue que les autres branches qui ne dépassent pas de la capsule 300.

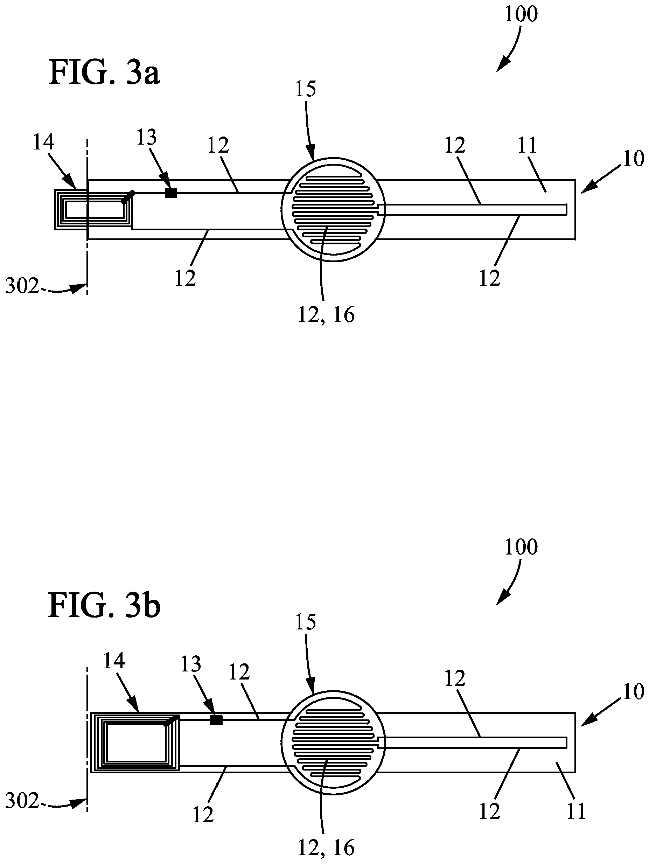

On voit également sur la figure la que l'antenne 14 dépasse de la jupe de la capsule 300. On note ce dépassement d'antenne 14 dans chacun des autres exemples de réalisation illustrés en figures 3a, 4a, 5a et 6a.

L'avantage de faire dépasser une portion de l'antenne 14 de la capsule 300 est d'améliorer les performances de rayonnement de l'antenne 14.

On note toutefois que ce dépassement peut être contradictoire avec les exigences d'un château qui veut une solution non-visible, pour notamment conserver une esthétique classique et traditionnelle.

Le Demandeur observe cependant que les châteaux se doivent de signaler la présence du dispositif sur leur bouteille d'une manière ou d'une autre pour différencier leurs propres bouteilles ou pour rassurer à terme le consommateur.

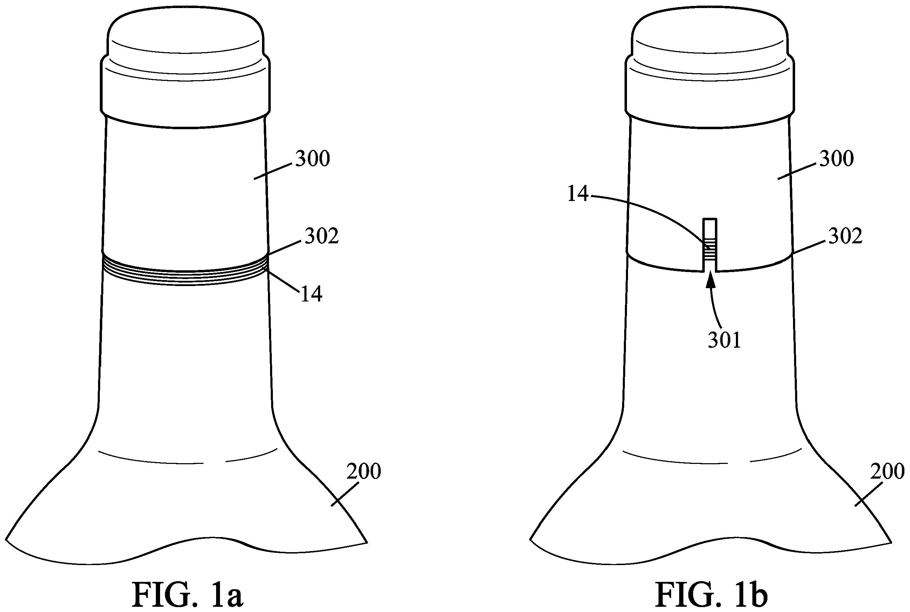

Ainsi, faire dépasser un anneau d'un ou deux millimètres de la capsule (figures 1a, 4a, 5a, 6a) ou une languette (figures 2a et 3a) recouvert d'un adhésif opaque noir par exemple pour les bouteilles de vin rouge présente l'avantage de la discrétion et offre un moyen simple aux châteaux d'afficher que leurs bouteilles sont protégées, et ce de manière presque intuitive pour le consommateur ou du moins facilement explicable par une quelconque opération de communication des châteaux, mais également des vendeurs, revendeurs, restaurateurs, distributeurs, commissaires-priseurs, ou encore des collectionneurs.

On peut également prévoir une légère encoche 301 dans la capsule 300 pour faire apparaître une portion de l'antenne 14, comme illustré en figure 1b.

Alternativement, on peut aussi prévoir un adhésif (non représenté ici) de la couleur de la capsule 300 pour rendre le dispositif 100 moins visible.

Alternativement, l'exemple de la figure 2b diffère de l'exemple de la figure 2a en ce que la branche principale sur laquelle est positionnée l'antenne 14 ne dépasse pas de la capsule 300.

Dans chacun des autres exemples de réalisation illustrés en figures 3b, 4b, 5b et 6b, l'antenne 14 ne dépasse pas non plus.

Cette solution plus discrète peut être préférée par certains châteaux.

Dans chacun des exemples décrits ici, la puce 13 stocke une donnée d'identification contenant au moins une information relative au contenu de la bouteille 200 ; il peut s'agir par exemple d'information d'identification du type nom du château, du millésime, de l'année de mise en bouteille, du numéro de la bouteille, la contenance de la bouteille, le volume d'alcool, etc.

Ces informations sont enregistrées au préalable dans la puce 13 par le propriétaire du château, par exemple après la mise en bouteille.

Dans les exemples décrits ici, l'antenne 14 est configurée pour coopérer avec la puce 13 afin de transmettre par voie sans fil la donnée d'identification à destination d'un lecteur externe 400. Le lecteur 400 est ensuite capable d'afficher ces informations d'identification sur un écran.

De préférence, une telle transmission est possible lorsque l'antenne 14 est dans la plage de couverture du lecteur 400.

La puce électronique 13 peut comprendre un module de stockage sécurisé accessible par une clé d'identification.

Il est ainsi possible de prévoir une transmission d'information sécurisée avec une clé d'identification détenue par les lecteurs externes certifiés.

La puce électronique 13 peut comprendre un autre module de stockage sécurisé supplémentaire accessible par exemple par le seul le propriétaire du château à l'origine de la bouteille.

Ce module de stockage supplémentaire peut être accessible par exemple en utilisant une fréquence différente que celle utilisée pour accéder au module de stockage principal.

La puce électronique 13 peut encore comprendre un autre module de stockage sécurisé supplémentaire accessible par exemple par toute personne publique disposant d'un terminal de communication de type « *Smartphone ».*

On comprendra ici que ce module de stockage contiendra uniquement des données non sensibles sans aucun intérêt pour l'industrie de la contrefaçon. Un tel module peut par exemple contenir des informations d'ordre marketing à destination d'une personne regardant la bouteille dans une vitrine.

De préférence, une technologie de type NFC est utilisée ici pour la transmission de données vers le lecteur externe 400 ; un protocole de communication propriétaire et/ou crypté est préféré pour ne pas intercepter la clé d'identification de la puce 13 ainsi que les données transmises.

D'autres technologies de communication sans fil peuvent également être envisagées.

L'ensemble 500 formé par le lecteur 400 et le dispositif 100 est autonome et ne nécessite pas l'utilisation d'une connexion à un serveur Internet ou l'accès à une quelconque base de données du château en question.

Le fait d'avoir un système autonome limite les pirateries informatiques qui permettraient de simplifier davantage les actes de contrefaçon.

On comprend que la puce électronique 13 peut déterminer que la capsule 300 a été arrachée totalement ou partiellement lorsqu'au moins un des fils 12 formant les pistes du circuit 10 a été sectionné.

La section ou l'arrachage d'une de ces pistes 12 rompt en effet la liaison électrique entre la puce 13 et l'antenne 14 ; la puce 13 peut alors détecter l'événement perturbateur.

De préférence, la puce 13 garde en mémoire le fait que la piste 12 a été rompue.

Ceci est particulièrement avantageux dans le cas où la piste serait ressoudée après par exemple re-remplissage de la bouteille.

Le circuit 10 comprend également des moyens de détection de perçage de bouchon 15.

Ces moyens 15 sont caractéristiques de la présente invention.

Dans chacun des exemples décrits ici, ces moyens de détection de perçage de bouchon 15 recouvrent le goulot 201 de la bouteille 200 lorsque le dispositif 100 est positionné entre la bouteille 200 et la capsule 300.

Plus particulièrement, dans les exemples des figures 2a et 2b, les moyens de détection de perçage de bouchon 15 sont positionnés dans la portion centrale de l'étoile pour recouvrir le goulot 201 lorsque le dispositif 100 est positionné entre la bouteille 200 et la capsule 300.

Ces moyens de détection de perçage de bouchon 15 sont reliés électriquement à la puce électronique 13et l'antenne 14 par lefil conducteur 12 de la branche principale.

Dans chacun des exemples décrits ici, les moyens de détection de perçage de bouchon 15 sont formés par un maillage 16 ; ce maillage 16 est formé par le même fil conducteur 12 que le circuit.

Ce fil forme ainsi à la fois les pistes 16 du maillage et les pistes du circuit.

Alternativement, on comprend ici que le maillage 16 peut être formé par d'autres fils conducteurs que le fil 12 du circuit.

La puce électronique 13 est ainsi configurée de manière à déterminer si le bouchon 200 a été percée totalement ou partiellement lorsqu'au moins une des pistes du maillage a été sectionnée.

Dans chacun des exemple décrits ici, les pistes 12 et 16 parcourent le col de la bouteille 200 de part et d'autre du goulot 201, traversant le haut du goulot et recouvrant entièrement la partie supérieure du bouchon en allant jusqu'au-delà de la bague de la bouteille.

Ainsi, suite à une section d'une des pistes 12 du circuit ou d'une des pistes 16 du maillage, la puce 13 n'est plus reliée électriquement à l'antenne 14.

Plusieurs cas se présentent : soit la transmission de la donnée d'identification par l'antenne 14 n'est plus possible ; soit la puce 13 déduit l'information relative au perçage ou l'arrachage et, dans ce cas, l'antenne 14 envoie au lecteur 400 une information relative à l'intrusion détectée (perçage et/ou arrachage).

Les pistes 12 du circuit constituent ainsi des moyens de détection d'arrachage de la capsule 300, tandis que les pistes 16 du maillage constituent des moyens de détection de perçage du bouchon 202.

Dans un autre cas, les pistes 12 du circuit sont reliées à l'antenne 14 et le circuit du maillage 16 intègre d'autres pistes, qui sont capables de détecter l'arrachage de la capsule 300 et/ou le retrait du bouchon 202.

Ainsi, si le bouchon 202 se trouve retiré ou percé, ou si la capsule 300 a été arrachée (même délicatement), la puce 13 garde sa capacité à communiquer les données d'identification qu'elle contient au lecteur 400 ainsi que l'information d'intrusion ou de tentative d'intrusion.

Les pistes 12 et 16 sont constituées encuivre ; le cuivre est ici choisi pour ces propriétés conductrices, sa résistance à l'oxydation et sa résistance mécanique dans le temps.

Ce maillage est fin.

Dans les exemples décrits ici, les pistes 16 du maillage sont espacées entre elles d'une distance de séparation sensiblement comprise entre de l'ordre de 80 à 150 µm.

De la même façon, chacune des pistes 16 du maillage présentent une largeur sensiblement comprise entre de l'ordre de 80 à 150µm..

Dans les exemples décrits ici, chacune des pistes 16 dudit maillage présente une épaisseur comprise entre de l'ordre de 10 µm à 50 µm.

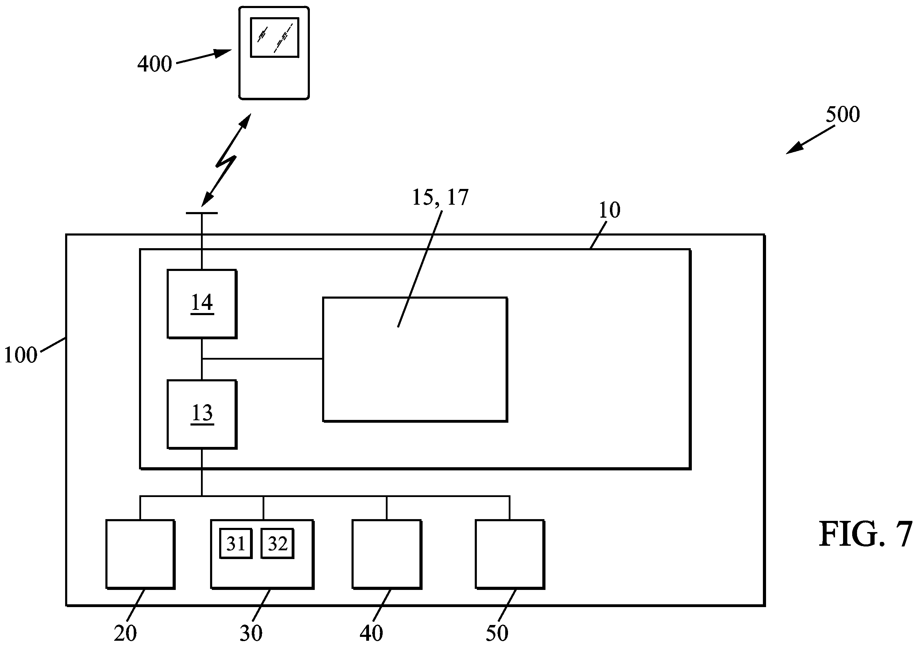

Alternativement, les moyens de détection de perçage de bouchon 15 peuvent comprendre une pastille 17 (illustrée uniquement en figure 7).

Cette pastille 17 de préférence en céramique est configurée de manière à ce que, lorsqu'un objet extérieur tel qu'une aiguille perce ladite pastille 17, la liaison électrique entre la pastille 17 et la puce 13 est rompue.

De la même manière, lorsque cette liaison électrique est rompue, plusieurs cas se présentent : soit la transmission de la donnée d'identification par l'antenne 14 n'est plus possible, soit la puce 13 déduit l'information relative au perçage et, dans ce cas, l'antenne 14 envoie au lecteur 400 une information relative au perçage détecté.

La figure 7 illustre de façon schématique un ensemble 500 pour l'authentification d'une bouteille 200 dont le goulot 201 est fermé par un bouchon 202 recouvert par une capsule 300.

Cet ensemble 500 comprend notamment :
- un dispositif électronique d'authentification 100 tel que celui décrit ci-dessus, et
- un lecteur externe 400 apte à lire la donnée d'identification stockée dans la puce électronique 13 du dispositif 100 lorsque l'antenne 14 du dispositif 100 est dans la plage de couverture du lecteur 400.

Dans cet exemple, le dispositif 100 est équipé d'instruments supplémentaires.

Plus particulièrement, il est prévu une sonde d'impédance 20 pour mesurer une variation d'impédance aux bornes des moyens de détection de perçage de bouchon 15 ; la détection d'une variation d'impédance par la sonde 20 permet de déterminer si le bouchon 202 a été percé.

Dans cet exemple, il est également prévu que le dispositif 100 comprend une sonde de température et/ou d'humidité 30.

Cette sonde 30 est reliée électriquement à la puce 13 et permet de fournir en temps réel à la puce 13 les informations relatives à la température et/ou au taux d'humidité ambiants.

Dans ce cas, on comprend ici que la puce 13 peut stocker et historiser les informations reçues de la sonde 30.

Toujours dans cet exemple de réalisation illustré en figure 7, il est également prévu que la sonde de température et/ou d'humidité 30 soit connectée à un thermostat 31 et un hygrostat 32.

Le thermostat 31 et l'hygrostat 32 sont alors prévus pour générer un premier signal d'alerte si la température et/ou le taux d'humidité mesurés par la sonde 30 ne sont pas situés dans une plage de valeurs prédéterminées.

Comme expliqué précédemment, on peut prévoir que ce premier signal d'alerte est généré si la température et/ou le taux d'humidité mesurés ne sont pas dans une plage de valeurs prédéterminées pendant une période d'exposition déterminée.

Il est également possible, dans une autre variante, que le thermostat 31 intègre une sonde de température et se passe donc la sonde 30 ; de la même façon, on peut prévoir que l'hygrostat 32 intègre une sonde d'humidité et se passe donc aussi de la sonde 30.

Dans cette variante, le thermostat 31 et l'hygrostat 32 se suffisent donc à eux-mêmes.

Dans cet exemple, le dispositif 100 comprend un capteur de vibrations 40 pour mesurer les vibrations se propageant à travers la bouteille 200 et pour générer un deuxième signal d'alerte lorsque lesdites vibrations mesurées présentent une fréquence sensiblement comprise entre de l'ordre de 30Hz à 300Hz pendant environ au moins une seconde.

Enfin, toujours dans cet exemple de réalisation illustré en figure 7, le dispositif 100 comprend un récepteur de géolocalisation 50 de type GPS configuré pour transmettre à ladite puce électronique 13 les coordonnées géographiques du dispositif.

La puce 13 peut ainsi stocker et historiser les données relatives aux coordonnées géographiques de la bouteille.

Il est alors possible par exemple de mémoriser les coordonnées de la bouteille 200 lors d'une lecture par le lecteur 400. Ceci permet de retracer l'historique des différentes lectures en faisant un rapprochement avec les informations propres à chaque lecteur.

On pourra préciser que, dans la figure 1a, l'antenne 14 est composée d'une pluralité de spires formant un anneau. Dans cet exemple, l'antenne 14 est disposée juste en dessous du bas de la jupe de la capsule 300.

Dans cet exemple, l'antenne 14 est reliée au circuit principal 10 par un même fil conducteur 12 disposé de part et d'autre du goulot. On notera qu'il faut nécessairement casser ce fil 12 pour enlever le bouchon 202 de la bouteille 200.

On notera ici que la puce peut être positionnée à la périphérie des moyens de détection de perçage du bouchon 15, au-dessus de la bague de la bouteille, une fois l'ensemble dispositif 100/capsule 300 serti, ou bien plus près de l'antenne, sous la bague une fois l'ensemble dispositif 100/capsule 300 serti.

Les autres modes de réalisation ne sont que des variantes possibles de mise en oeuvre avec des formes de support 11 et de circuit 10 différents.

Dans les figures 3a et 3b, il s'agit d'un dispositif 100 simple avec une seule antenne 14 et un support 11 qui présente uniquement deux branches.

On notera ici que les largeurs de branches peuvent être différentes (par exemple pour un gain de matière).

Il est important de noter ici que le dispositif 100 représenté sur la figure la est moins couteux que le dispositif 100 représenté en figures 2a et 2b avec une étoile à six branches : il dispose de moins de matière.

Par ailleurs, un tel dispositif ne modifie pas la finition de la capsule 300 sertie sur toute sa surface mis à part les deux fils 12 qui forment un marquage sur la capsule 300 de part et d'autre du goulot de la bouteille.

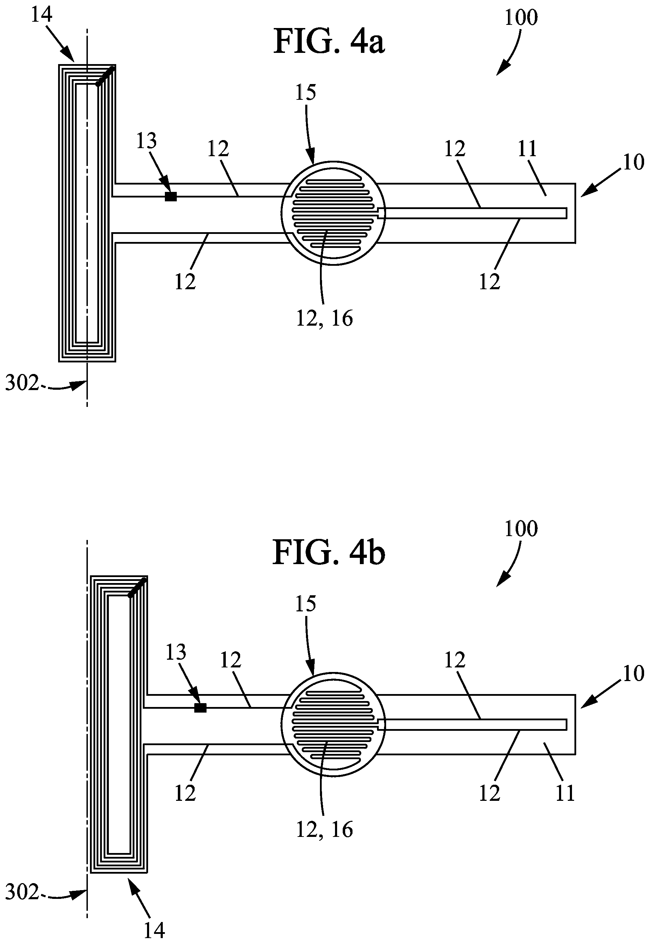

Dans les figures 4a et 4b, le circuit 10 comprend une antenne 14 large qui s'étend latéralement de part et d'autre du support 11 pour former un « T ».

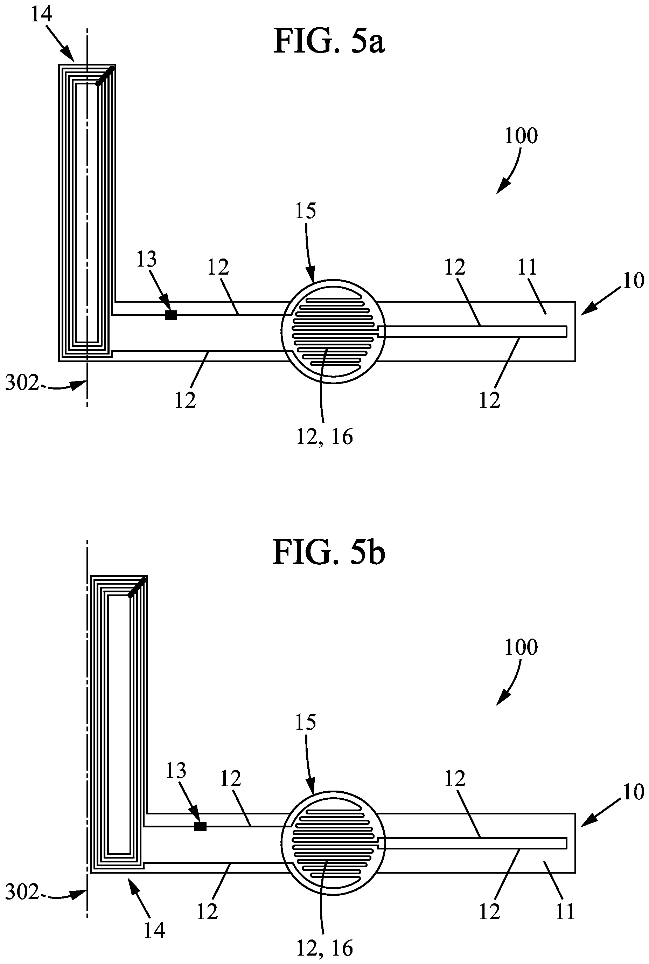

Dans les figures 5a et 5b, le circuit 10 comprend une antenne 14 large qui s'étend latéralement d'un seul côté du support 11 pour former un « L ».

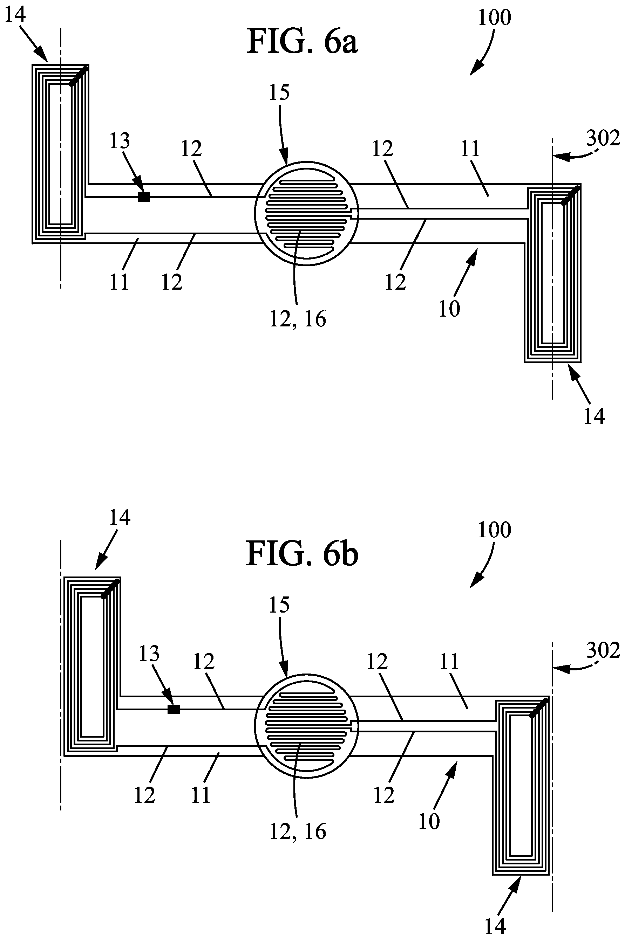

Dans les figures 6a et 6b, le circuit 10 comprend deux antennes 14 qui, lorsque le dispositif 100 est placé entre la bouteille 200 et la capsule 300, s'enroulent autour de la bouteille pour couvrir toute la périphérie de la bouteille.

On note ici que les dispositifs 100 représentés dans chacune des figures 1a, 4a, 4b, 5a, 5b, 6a et 6b disposent après sertissage d'une antenne tout autour du goulot 201 de la bouteille 200.

Ceci simplifie l'utilisation du dispositif 100 en ce que le consommateur mais aussi les vendeurs, revendeurs, restaurateurs, distributeurs, commissaires-priseurs, ou encore les collectionneurs, peuvent approcher le lecteur 400 à n'importe quel endroit autour de la capsule 300 et non pas à un endroit précis comme avec les dispositifs représentés dans les figures 1b, 2a, 2b, 3a et 3b.

L'homme du métier notera ici que le Demandeur s'est attaché à décrire ici de manière détaillée le dispositif représenté par les figures 2a et 2b car il s'agit de l'exemple le plus représentatif et le plus complet. Il ne représente en aucun cas le meilleur dispositif et/ou celui qui sera privilégié par les châteaux. Il a été choisi de le décrire plus en détail car les autres dispositifs découlent de cette description.

Par ailleurs, ces différents exemples de réalisation ne sont que quelques exemples parmi d'autres possibles. L'homme du métier pourra envisager d'autres formes possibles sans pour autant s'éloigner de la présente invention.

On notera notamment que plusieurs formes pour les pistes du circuit et du maillage sont envisageables pour l'homme du métier.

Ainsi, la présente invention avec les différentes caractéristiques techniques décrites ci-dessus permet de répondre aux problématiques soulevées par les nouvelles techniques de contrefaçon en matière de vin.

La présente invention permet par ailleurs de satisfaire aux exigences des viticulteurs et des producteurs, et notamment ceux des grands crus.

En effet, les châteaux qui gèrent les grands crus et notamment les premiers crus doivent donner une image de classicisme, d'élégance et de pureté.

Il est donc important que le dispositif anti-fraude soit le moins visible possible.

Dans le cadre de la présente invention, le dispositif 100 est positionné entre la bouteille 200 et la capsule 300 métallique. Une fois la bouteille sertie, il n'est pas visible ou seulement très peu.

La présente invention offre par ailleurs une solution efficace pour lutter contre le phénomène dit de re-remplissage : le dispositif grâce à la présence de ce maillage fin ou de cette pastille est capable de détecter le perçage du bouchon en liège. Aucune solution dans l'état de la technique ne propose de solution pour éviter le re-remplissage.

Dans l'état de la technique, les étiquettes sans contact et les scellés nécessitent la consultation d'une base de données installée sur des serveurs externes.

Ces systèmes imposent alors à l'utilisateur de se connecter à une application logicielle installée sur un terminal de communication avant de délivrer l'information de la puce. Ceci crée des failles informatiques dans ces dispositifs lorsque les serveurs, les applications et/ou les sites Internet sont piratés.

Le dispositif proposé dans le cadre de la présente invention se suffit à lui-même : il permet d'obtenir une confirmation de l'authenticité de la bouteille physique (le contenant) depuis son origine à la mise en bouteille au Château. Il permet également de confirmer ou d'infirmer si le bouchon a été ouvert ou percé. Dans sa version la plus évoluée avec le capteur de vibrations, il peut confirmer également l'authenticité du contenu de la bouteille, et donc l'authenticité de la bouteille dans son ensemble.

Le procédé « *CAPSEAL*® », extérieur à la capsule, est par définition vulnérable en pouvant être déplacé sur une bouteille contrefaite et annulant ici son intérêt. Dans le cadre de la présente invention, le retrait du dispositif 100 donne obligatoirement l'information à la puce 13 qui peut confirmer si la bouteille 200 est authentique ou pas.

De plus, le dispositif 100 selon la présente invention peut afficher sur le lecteur 400 l'étiquette du château correspondant aux données d'identification de la puce 13. Ceci a l'avantage de donner une confirmation visuelle supplémentaire au consommateur profane qui n'a pas en mémoire le graphisme exact de l'étiquette du château qu'il achète ou même l'orthographe du nom du château. Il peut ainsi vérifier en direct et comparer en détail l'étiquette de la bouteille qu'il s'apprête à acheter avec celle affichée sur son lecteur.

Pour toutes les raisons évoquées ci-dessus, l'objet de l'invention se présente comme une solution très efficace et discrète pour lutter contre la contrefaçon des vins du type grands crus. Bien évidemment, d'autres applications pourront également être envisagées dans le cadre de la présente invention.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Dispositif électronique d'authentification (100) d'une bouteille (200) dont le goulot (201) est fermé par un bouchon (202) recouvert par une capsule longiligne (300), ledit dispositif (100) destiné à être positionné entre ladite bouteille (200) et ladite capsule (300) comportant un circuit électronique (10) comprenant un support isolant (11) souple sur lequel s'étend longitudinalement et sans chevauchement au moins un fil conducteur (12) formant les pistes dudit circuit (10), ledit circuit électronique (10) comprenant :
- une puce électronique (13) stockant une donnée d'identification contenant au moins une information relative au contenu de ladite bouteille (200), et
- une antenne (14) configurée pour coopérer avec ladite puce (13) afin de transmettre par voie sans fil ladite au moins une donnée d'identification à destination d'un lecteur externe (400) lorsque ladite antenne (14) est dans la plage de couverture dudit lecteur (400),
ledit dispositif (100) étant **caractérisé en ce que** ledit circuit électronique (10) comprend des moyens de détection de perçage de bouchon (15) recouvrant au moins partiellement ledit goulot (201) lorsque ledit dispositif (100) est positionné entre ladite bouteille (200) et ladite capsule (300), et reliés électriquement à ladite puce électronique (13) par les pistes dudit circuit (10), ladite puce électronique (13) étant configurée de manière à déterminer que le bouchon (202) est percé ou retiré lorsque la liaison électrique avec lesdits moyens de détection de perçage de bouchon (15) est rompue

2. Dispositif (100) selon la revendication 1, **caractérisé en ce que** les moyens de détection de perçage de bouchon (15) comprennent une pastille (17), de préférence composée au moins partiellement en céramique, configurée de manière à ce que, lorsqu'un objet extérieur tel qu'une aiguille perce ladite pastille (17), la liaison électrique entre ladite pastille (17) et ladite puce (13) est rompue.

3. Dispositif (100) selon la revendication 1 ou 2, **caractérisé en ce qu'**il comprend une sonde d'impédance (20) configurée pour mesurer une variation d'impédance aux bornes desdits moyens de détection de perçage de bouchon (15) et pour déterminer en fonction de la variation mesurée si le bouchon (202) a été percé.

4. Dispositif (100) selon l'une quelconque des revendications 1 à 3, **caractérisé en ce que** le support isolant (11) se présente sous la forme d'une étoile à six branches, ladite antenne (14) étant positionnée sur la portion distale d'une des six branches de ladite étoile et les moyens de détection de perçage de bouchon (15) étant positionnés dans la portion centrale de ladite étoile pour recouvrir au moins partiellement ledit goulot (201) lorsque ledit dispositif (100) est positionné entre ladite bouteille (200) et ladite capsule (300).

5. Dispositif (100) selon l'une quelconque des revendications 1 à 4, **caractérisé en ce que** le support isolant (11) comprend un gaufrage à la périphérie des moyens de détection de perçage de bouchon (15) pour épouser la forme du goulot (201) de ladite bouteille (200) lorsque ledit dispositif (100) est positionné entre ladite bouteille (200) et ladite capsule (300).

6. Dispositif (100) selon l'une quelconque des revendications 1 à 5, **caractérisé en ce que** le support isolant (11) comprend une portion élastique à la périphérie des moyens de détection de perçage de bouchon (15) pour épouser la forme du goulot (201) de ladite bouteille (200) lorsque ledit dispositif (100) est positionné entre ladite bouteille (200) et ladite capsule (300).

7. Dispositif (100) selon l'une quelconque des revendications 1 à 6, **caractérisé en ce que** le support isolant (11) est constitué au moins partiellement dans un matériau ayant des propriétés mécaniques, telles que par exemple un polymère thermoplastique, pour résister aux contraintes mécaniques exercées lors du sertissage de la capsule (300) avec ladite bouteille (200).

8. Dispositif (100) selon l'une quelconque des revendications 1 à 7, **caractérisé en ce que** les pistes (12, 16) sont constituées au moins partiellement dans un matériau conducteur, inoxydable, malléable et ductile tel que par exemple le cuivre, l'étain ou encore l'aluminium.

9. Dispositif (100) selon l'une quelconque des revendications 1 à 8, **caractérisé en ce qu'**il comprend un capteur de vibrations (40) configuré pour mesurer les vibrations se propageant à travers la bouteille et pour générer un deuxième signal d'alerte lorsque lesdites vibrations mesurées présentent une fréquence sensiblement comprise entre de l'ordre de 30Hz et 300Hz pendant environ une seconde.

10. Dispositif (100) selon l'une quelconque des revendications 1 à 9, **caractérisé en ce que** ladite antenne (14) dépasse au moins partiellement de ladite capsule (300) lorsque ledit dispositif (100) est positionné entre ladite capsule (300) et ladite bouteille (200).

11. Bouteille (200) dont le goulot (201) est fermé par un bouchon (202) recouvert par une capsule (300), ladite bouteille (200) comprenant un dispositif électronique d'authentification (100) selon l'une quelconque des revendications 1 à 10 positionné entre ladite bouteille (200) et ladite capsule (300).

12. Procédé de fabrication d'une bouteille (200) dont le goulot (201) est fermé par un bouchon (202) recouvert par une capsule (300), **caractérisé en ce qu'**il comporte notamment les étapes suivantes :
- une première étape au cours de laquelle on positionne un dispositif électronique d'authentification (100) selon l'une quelconque des revendications 1 à 10 autour du goulot (201) de la bouteille (200),
- une deuxième étape au cours de laquelle la capsule (300) et ledit dispositif (100) sont sertis ensemble autour du goulot (201) pour sceller la fermeture de la bouteille (200).

13. Ensemble (500) pour l'authentification d'une bouteille (200) dont le goulot (201) est fermé par un bouchon (202) recouvert par une capsule (300), ledit ensemble (500) comprenant :
- au moins un dispositif électronique d'authentification (100) selon l'une quelconque des revendications 1 à 10 destiné à être positionné entre ladite bouteille (200) et ladite capsule (300), et
- un lecteur externe (400) apte à lire ladite donnée d'identification stockée dans la puce électronique (13) dudit dispositif (100) lorsque l'antenne (14) dudit dispositif (100) est dans la plage de couverture dudit lecteur (400).

14. Utilisation d'un dispositif électronique d'authentification (100) selon l'une quelconque des revendications 1 à 10 pour l'authentification d'une bouteille (200) contenant un vin de type grands crus.

15. Capsule (300) pour bouteille (200) comprenant un dispositif électronique d'authentification (100) selon l'une quelconque des revendications 1 à 10.

## Patentansprüche

1. Elektronische Vorrichtung zur Authentifizierung (100) einer Flasche (200), deren Hals (201) mit einem Stopfen (202) verschlossen ist, der mit einer länglichen Kapsel (300) bedeckt ist, wobei die Vorrichtung (100), die dazu bestimmt ist, zwischen der Flasche (200) und der Kapsel (300) positioniert zu werden, eine elektronische Schaltung (10) umfasst, die einen nachgiebigen isolierenden Träger (11) umfasst, auf dem sich längs und ohne Überlappung mindestens ein Leiterdraht (12) erstreckt, der Bahnen der Schaltung (10) bildet, wobei die elektronische Schaltung (10) umfasst:
- einen elektronischen Chip (13), der eine Identifizierungsdateneinheit speichert, die mindestens eine Information bezüglich des Inhalts der Flasche (200) enthält, und
- eine Antenne (14), die dafür konfiguriert ist, mit dem Chip (13) zusammenzuwirken, um die mindestens eine Identifizierungsdateneinheit drahtlos an ein externes Lesegerät (400) zu übertragen, wenn sich die Antenne (14) im Abdeckungsbereich des Lesegeräts (400) befindet,
wobei die Vorrichtung (100) **dadurch gekennzeichnet ist, dass** die elektronische Schaltung (10) Stopfen-Durchstecherkennungsmittel (15) umfasst, die den Hals (201) mindestens teilweise bedecken, wenn die Vorrichtung (100) zwischen der Flasche (200) und der Kapsel (300) positioniert ist, und die über die Bahnen der Schaltung (10) elektrisch mit dem elektronischen Chip (13) verbunden sind, wobei der elektronische Chip (13) so konfiguriert ist, dass er bestimmt, dass der Stopfen (202) durchstochen oder herausgezogen wird, wenn die elektrische Verbindung zu den Stopfen-Durchstecherkennungsmitteln (15) unterbrochen wird.

2. Vorrichtung (100) nach Anspruch 1, **dadurch gekennzeichnet, dass** die Stopfen-Durchstecherkennungsmittel (15) ein vorzugsweise mindestens teilweise aus Keramik zusammengesetztes Plättchen (17) umfassen, das so konfiguriert ist, dass wenn ein äußeres Objekt wie etwa eine Nadel das Plättchen (17) durchsticht, die elektrische Verbindung zwischen dem Plättchen (17) und dem Chip (13) unterbrochen wird.

3. Vorrichtung (100) nach Anspruch 1 oder 2, **dadurch gekennzeichnet, dass** sie eine Impedanzsonde (20) umfasst, die dafür konfiguriert ist, eine Impedanzänderung an den Klemmen der Stopfen-Durchstecherkennungsmittel (15) zu messen, und dafür, in Abhängigkeit von der gemessenen Änderung zu bestimmen, ob der Stopfen (202) durchstochen wurde.

4. Vorrichtung (100) nach einem der Ansprüche 1 bis 3, **dadurch gekennzeichnet, dass** sich der isolierende Träger (11) in der Form eines Sterns mit sechs Armen darstellt, wobei die Antenne (14) am distalen Abschnitt eines der sechs Arme des Sterns positioniert ist und die Stopfen-Durchstecherkennungsmittel (15) im zentralen Abschnitt des Sterns positioniert sind, um den Hals (201) mindestens teilweise zu bedecken, wenn die Vorrichtung (100) zwischen der Flasche (200) und der Kapsel (300) positioniert ist.

5. Vorrichtung (100) nach einem der Ansprüche 1 bis 4, **dadurch gekennzeichnet, dass** der isolierende Träger (11) eine Prägung am Umfang der Stopfen-Durchstecherkennungsmittel (15) umfasst, um sich an die Form des Halses (201) der Flasche (200) anzuschmiegen, wenn die Vorrichtung (100) zwischen der Flasche (200) und der Kapsel (300) positioniert ist.

6. Vorrichtung (100) nach einem der Ansprüche 1 bis 5, **dadurch gekennzeichnet, dass** der isolierende Träger (11) einen elastischen Abschnitt am Umfang der Stopfen-Durchstecherkennungsmittel (15) umfasst, um sich an die Form des Halses (201) der Flasche (200) anzuschmiegen, wenn die Vorrichtung (100) zwischen der Flasche (200) und der Kapsel (300) positioniert ist.

7. Vorrichtung (100) nach einem der Ansprüche 1 bis 6, **dadurch gekennzeichnet, dass** der isolierende Träger (11) mindestens teilweise aus einem Material besteht, das mechanische Eigenschaften aufweist, wie zum Beispiel einem thermoplastischen Polymer, um den mechanischen Belastungen zu widerstehen, die beim Verpressen der Kapsel (300) mit der Flasche (200) ausgeübt werden.

8. Vorrichtung (100) nach einem der Ansprüche 1 bis 7, **dadurch gekennzeichnet, dass** die Bahnen (12, 16) mindestens teilweise aus einem leitenden, rostfreien, hämmerbaren und streckbaren Material bestehen, wie zum Beispiel Kupfer, Zinn oder auch Aluminium.

9. Vorrichtung (100) nach einem der Ansprüche 1 bis 8, **dadurch gekennzeichnet, dass** sie einen Schwingungssensor (40) umfasst, der dafür konfiguriert ist, die Schwingungen zu messen, die sich durch die Flasche hindurch ausbreiten, und dafür, ein zweites Alarmsignal zu erzeugen, wenn die gemessenen Schwingungen eine Frequenz aufweisen, die während etwa einer Sekunde im Wesentlichen zwischen ungefähr 30 Hz und 300 Hz beträgt.

10. Vorrichtung (100) nach einem der Ansprüche 1 bis 9, **dadurch gekennzeichnet, dass** die Antenne (14) mindestens teilweise von der Kapsel (300) übersteht, wenn die Vorrichtung (100) zwischen der Kapsel (300) und der Flasche (200) positioniert ist.

11. Flasche (200), deren Hals (201) mit einem Stopfen (202) verschlossen ist, der mit einer Kapsel (300) bedeckt ist, wobei die Flasche (200) eine elektronische Authentifizierungsvorrichtung (100) nach einem der Ansprüche 1 bis 10 umfasst, die zwischen der Flasche (200) und der Kapsel (300) positioniert ist.

12. Verfahren zur Herstellung einer Flasche (200), deren Hals (201) mit einem Stopfen (202) verschlossen ist, der mit einer Kapsel (300) bedeckt ist, **dadurch gekennzeichnet, dass** es insbesondere die folgenden Schritte umfasst:
- einen ersten Schritt, in dessen Verlauf eine elektronische Authentifizierungsvorrichtung (100) nach einem der Ansprüche 1 bis 10 um den Hals (201) der Flasche (200) herum positioniert wird,
- einen zweiten Schritt, in dessen Verlauf die Kapsel (300) und die Vorrichtung (100) miteinander um den Hals (201) herum verpresst werden, um den Verschluss der Flasche (200) zu versiegeln.

13. Anordnung (500) zur Authentifizierung einer Flasche (200), deren Hals (201) mit einem Stopfen (202) verschlossen ist, der mit einer Kapsel (300) bedeckt ist, wobei die Anordnung (500) umfasst:
- mindestens eine elektronische Authentifizierungsvorrichtung (100) nach einem der Ansprüche 1 bis 10, die dazu bestimmt ist, zwischen der Flasche (200) und der Kapsel (300) positioniert zu werden, und
- ein externes Lesegerät (400), das in der Lage ist, die Identifizierungsdateneinheit, die im elektronischen Chip (13) der Vorrichtung (100) gespeichert ist, zu lesen, wenn sich die Antenne (14) der Vorrichtung (100) im Abdeckungsbereich des Lesegeräts (400) befindet.

14. Verwendung einer elektronischen Authentifizierungsvorrichtung (100) nach einem der Ansprüche 1 bis 10 zur Authentifizierung einer Flasche (200), die einen Wein vom Typ Grand Cru enthält.

15. Kapsel (300) für eine Flasche (200), die eine elektronische Authentifizierungsvorrichtung (100) nach einem der Ansprüche 1 bis 10 umfasst.

## Claims

1. Electronic authentication device (100) for a bottle (200) for which the neck (201) is closed off by a stopper (202) covered with a long and narrow capsule (300), said device (100) designed to be placed between said bottle (200) and said capsule (300) comprising an electronic circuit (10) comprising a flexible insulating support (11) on which there is at least one conducting wire (12) in the longitudinal direction without overlapping, forming the tracks of said circuit (10), said electronic circuit (10) comprising:
- an electronic chip (13) storing identification data containing at least one piece of information related to the content of said bottle (200), and
- an antenna (14) configured to cooperate with said chip (13) for contactless transmission of at least one item of identification data to an external reader (400), for example when said antenna (14) is within the coverage range of said reader (400),
said device 100) being **characterised in that** said electronic circuit (10) comprises pierced stopper detection means (15) at least partially covering said neck (201) when said device (100) is positioned between said bottle (200) and said capsule (300), and electrically connected to said electronic chip (13) through the tracks of said circuit (10), said electronic chip (13) being configured so as to determine that the stopper (202) has been pierced or removed when the electrical connection with the pierced stopper detection means (15) is broken.

2. Device (100) according to claim 1, **characterised in that** the pierced stopper detection means (15) include a disk (17), preferably at least partly made of ceramic, configured such that when an external object such as a needle pierces said disk (17), the electrical connection between said disk (17) and said chip (13) is broken.

3. Device (100) according to claim 1 or 2, **characterised in that** it comprises an impedance probe (20) configured to measure a variation of impedance at the terminals of said pierced stopper detection means (15) and to determine if the stopper (202) has been pierced as a function of the measured variation.

4. Device (100) according to any one of claims 1 to 3, **characterised in that** the insulating support (11) is in the form of a six-pronged star, said antenna (14) being positioned on the distal portion of one of the six prongs of said star and the pierced stopper detection means (15) being positioned in the central portion of said star to at least partially cover said neck (201) when said device (100) is placed between said bottle (200) and said capsule (300).

5. Device (100) according to any one of claims 1 to 4, **characterised in that** the insulating support (11) is waffled around the periphery of the pierced stopper detection means (15) to match the shape of the neck (201) of said bottle (200) when said device (100) is placed between said bottle (200) and said capsule (300).

6. Device (100) according to any one of claims 1 to 5, **characterised in that** the insulating support (11) comprises an elastic portion around the periphery of the pierced stopper detection means (15) to match the shape of the neck (201) of said bottle (200) when said device (100) is placed between said bottle (200) and said capsule (300).

7. Device (100) according to any one of claims 1 to 6, **characterised in that** the insulating support (11) is at least partially made of a material with mechanical properties capable of resisting mechanical stresses applied when the capsule (300) is crimped on said bottle (200).

8. Device (100) according to any one of claims 1 to 7, **characterised in that** the tracks (12, 16) are at least partially composed of a conducting, non-oxidising, malleable and ductile material for example such as copper, tin or aluminium.

9. Device (100) according to any one of claims 1 to 8, **characterised in that** it comprises a vibrations sensor (40) configured to measure vibrations that propagate through the bottle and configured to generate a second warning signal when said measured variations have a frequency of the order of 30Hz to 300Hz for about one second.

10. Device (100) according to any one of claims 1 to 9, **characterised in that** said antenna (14) at least partially projects beyond said capsule (300) when said device (100) is placed between said capsule (300) and said bottle (200).

11. Bottle (200), the neck (201) of which is closed by a stopper (202) covered by a capsule (300), said bottle (200) comprising an electronic authentication device (100) according to any one of claims 1 to 10 positioned between said bottle (200) and said capsule (300).

12. Method of manufacturing a bottle (200) the neck (201) of which is closed by a stopper (202) covered by a capsule (300), **characterised in that** in general it is composed of the following steps:
- a first step during which an electronic authentication device (100) according to any one of claims 1 to 10 has been placed around the neck (201) of the bottle (200)
- a second step during which the capsule (300) and said device (100) are crimped together around the neck (201) to seal closing of the bottle (200).

13. Assembly (500) for authentication of a bottle (200) for which the neck (201) is closed off by a stopper (202) covered with a capsule (300), said assembly (500) comprising.
- at least one electronic authentication device (100) according to any one of claims 1 to 10 that will be positioned between said bottle (200) and said capsule (300), and
- an external reader (400) capable of reading the identification data stored in the electronic chip (13) of said device (100) when the antenna (14) of said device (100) is within the coverage range of said reader (400).

14. Use of an electronic authentication device (100) according to any one of claims 1 to 10 for the authentication of a bottle (200) containing a Grands Crus type wine.

15. Capsule (300) for bottle (200) comprising an electronic authentication device (100) according to any one of claims 1 to 10.
